(19) Europäisches Patentamt
European Patent Office
Office européen des brevets

(11) Veröffentlichungsnummer: **0 357 557 A2**

(12) **EUROPÄISCHE PATENTANMELDUNG**

(21) Anmeldenummer: **89810629.9**

(22) Anmeldetag: **24.08.89**

(51) Int. Cl.5: **A 01 N 37/18**
//(A01N37/18,43:56,37:26, 37:22)

(30) Priorität: **02.09.88 CH 3280/88**

(43) Veröffentlichungstag der Anmeldung:
**07.03.90 Patentblatt 90/10**

(84) Benannte Vertragsstaaten:
**AT BE CH DE ES FR GR IT LI LU NL SE**

(71) Anmelder: **CIBA-GEIGY AG**
**Klybeckstrasse 141**
**CH-4002 Basel (CH)**

(72) Erfinder: **Iwanzik, Wolfgang Paul, Dr.**
**Bodenackerstrasse 7 C**
**CH-4334 Sisseln (CH)**

**Maurer, Willy**
**Störklingasse 60**
**CH-4125 Riehen (CH)**

(54) **Synergistische Mischung.**

(57) Die Erfindung betrifft ein herbizides Mittel enthaltend als Wirkstoff ein Chloracetanilid der Formel I

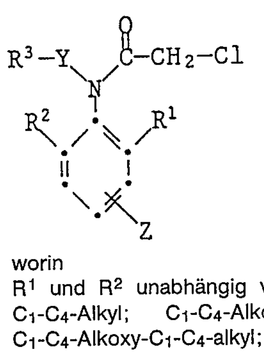

(I)

worin
$R^1$ und $R^2$ unabhängig voneinander Wasserstoff; Halogen; $C_1$-$C_4$-Alkyl; $C_1$-$C_4$-Alkoxy; $C_1$-$C_4$-Halogenalkyl; oder $C_1$-$C_4$-Alkoxy-$C_1$-$C_4$-alkyl;
Z Wasserstoff; Halogen; oder $C_1$-$C_4$-Alkyl;
Y $C_1$-$C_6$-Alkylen;
$R^3$ $C_1$-$C_4$-Alkoxy; $C_3$-$C_4$-Alkenyloxy; Cyano; $C_1$-$C_4$-Alkoxycarbonyl; $C_1$-$C_4$-Alkyl-CO-NH-; $(R^4)_2N$-CO-; Benzoyl; Halogenbenzoyl; einen gegebenenfalls bis zu zweifach gleich oder verschieden durch $C_1$-$C_4$-Alkyl substituiertes 1,3-Oxadiazol-2-yl, 1,3-Dioxolan-2-yl, Furan-2-yl, Tetrahydrofuran-2-yl, 1,3,4-Oxadiazol-2-yl, Pyrazol-1-yl, 1,2,4-Triazol-1-yl oder 1,2,4-Triazol-3-yl; $(C_1$-$C_4$-Alkoxy$)_2$CH-; $C_1$-$C_4$-Alkyl; Ethinyl; oder 4-Methyl-5-methylthio-1,2,4-triazol-3-yl;
$R^4$ unabhängig voneinander je Wasserstoff, $C_1$-$C_4$-Alkyl; $C_1$-$C_4$-Alkenyl; oder $C_1$-$C_4$-Alkinyl bedeutet
neben einer synergistisch wirksamen Menge eines N-Chloracetylcyclohexenamins der Formel II

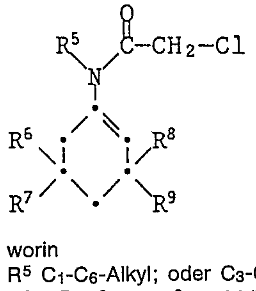

(II)

worin
$R^5$ $C_1$-$C_6$-Alkyl; oder $C_3$-$C_6$-Alkenyl; und
$R^6$, $R^7$, $R^8$ und $R^9$ unabhängig voneinander Wasserstoff; oder $C_1$-$C_4$-Alkyl;
bedeutet.

EP 0 357 557 A2

**Beschreibung**

**Synergistische Mischung**

Die Erfindung betrifft ein synergistisches Mittel, eine herbizide Wirkstoffkombination enthaltend. Das erfindungsgemässe Mittel eignet sich insbesondere zur selektiven Unkrautbekämpfung in Nutzpflanzenkulturen.

Die Erfindung betrifft auch ein Verfahren zur Bekämpfung von Unkräutern in Nutzpflanzenkulturen.

Es sind bereits zahlreiche herbizid wirksame Verbindungen aus der Klasse der Chloracetanilide bekannt geworden. Eine Zusammenstellung dieser Verbindungsklasse findet man bei R. Wegler, Chemie der Pflanzenschutz-und Schädlingsbekämpfungsmittel, Springer Verlag, Berlin, Heidelberg, New York, Bd. 2 (1970) Seite 311 ff., Bd. 5 (1977) Seite 244 ff. und Bd. 8 (1982) Seite 90 ff. und Seite 310 ff. Diese Verbindungen befriedigen nicht immer im Hinblick auf ihre Wirkungsstärke, Wirkungsdauer und die Anwendungsbreite bei den zu bekämpfenden Ackerunkräutern.

Eine weitere Klasse herbidiz wirksamer Acetylamine sind die aus der US-Patentschrift US-4 351 667, EP-A-13 429 und der EP-A-0 113 030 bekannt gewordenen N-Chloracetylcyclohexenamine. Auch diese Verbindungen sind Selektivherbizide, die nicht immer in ihrer Wirkungsstärke, Wirkungsdauer und in ihrer Anwendungsbreite bei den zu bekämpfenden Ackerunkräutern befriedigen. Insbesondere können diese N-Chloracetylcyclohexenamine nicht in ihrer Dauerwirkung befriedigen.

Es hat sich nun überraschenderweise gezeigt, dass eine mengenmässig variable Kombination von Wirkstoffen aus der Klasse der Chloracetanilide mit Wirkstoffen aus der Klasse der N-Chloracetylcyclohexenamine eine synergistische Wirkung entfaltet, die in vorteilhafter Weise der Bekämpfung von Unkräutern in Nutzpflanzenkulturen geeignet ist.

Diese synergistische Kombination ist zur Bekämpfung der wichtigsten Unkräuter geeignet, ohne dass dabei die Kulturpflanze geschädigt wird. Darüber hinaus wird bei einigen Ackerunkräutern eine Steigerung der Dauerwirkung beobachtet.

Die Erfindung betrifft ein neues herbizides Mittel zur selektiven Unkrautbekämpfung enthaltend als Wirkstoff ein Chloracetanilid der Formel I

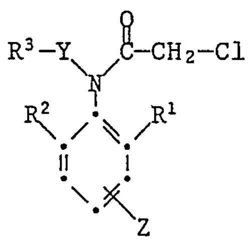

(I),

worin

$R^1$ und $R^2$ unabhängig voneinander Wasserstoff; Halogen; $C_1$-$C_4$-Alkyl; $C_i$-$C_4$-Alkoxy; $C_1$-$C_4$-Halogenalkyl; oder $C_1$-$C_4$-Alkoxy-$C_1$-$C_4$-alkyl;

Z Wasserstoff; Halogen; oder $C_1$-$C_4$-Alkyl;

Y $C_1$-$C_6$-Alkylen;

$R^3$ $C_1$-$C_4$-Alkoxy; $C_3$-$C_4$-Alkenyloxy; Cyano; $C_1$-$C_4$-Alkoxycarbonyl; $C_1$-$C_4$-Alkyl-CO-NH-; $(R^4)_2N$-CO-; Benzoyl; Halogenbenzoyl; einen gegebenenfalls bis zu zweifach gleich oder verschieden durch $C_1$-$C_4$-Alkyl substituiertes 1,3-Oxadiazol-2-yl, 1,3-Dioxolan-2-yl, Furan-2-yl, Tetrahydrofuran-2-yl, 1,3,4-Oxadiazol-2-yl, Pyrazol-1-yl, 1,2,4-Triazol-1-yl oder 1,2,4-Triazol-3-yl; $(C_1$-$C_4$-Alkoxy$)_2CH$-; $C_1$-$C_4$-Alkyl; Ethinyl; oder 4-Methyl-5-methylthio-1,2,4-triazol-3-yl;

$R^4$ unabhängig voneinander je Wasserstoff, $C_1$-$C_4$-Alkyl; $C_1$-$C_4$-Alkenyl; oder $C_1$-$C_4$-Alkinyl bedeutet neben einer synergistisch wirksamen Menge eines N-Chloracetylcyclohexenamins der Formel II

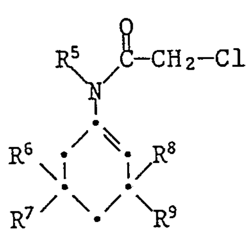

(II)

worin

$R^5$ $C_1$-$C_6$-Alkyl; oder $C_3$-$C_6$-Alkenyl; und

$R^6$, $R^7$, $R^8$ und $R^9$ unabhängig voneinander Wasserstoff; oder $C_1$-$C_4$-Alkyl;

bedeutet.

In den in dieser Beschreibung verwendeten Definitionen umfassen die angegebenen generischen Begriffe,

sowie die durch Kombination einzelner Unterbegriffe erhältlichen Substituenten, beispielsweise die folgenden spezifischen Einzelsubstituenten, wobei diese Aufzählung keine Einschränkung der Erfindung darstellt:
Alkyl: Methyl, Ethyl, n-Propyl, i-Propyl, n-Butyl, sek-Butyl, i-Butyl und tert-Butyl; vorzugsweise Methyl, Ethyl und i-Propyl.
Halogen: Fluor, Chlor, Brom und Jod; vorzugsweise Fluor, Chlor und Brom; besonders bevorzugt Fluor und Chlor.
Halogenalkyl: Fluormethyl, Difluormethyl, Trifluormethyl, Chlormethyl, Dichlormethyl, Trichlormethyl, 2,2,2-Trifluorethyl, 2-Fluorethyl, 2-Chlorethyl und 2,2,2-Trichlorethyl.
Alkoxy: Methoxy, Ethoxy, Propyloxy, i-Propyloxy, n-Butyloxy, i-Butyloxy, s-Butyloxy und t-Butyloxy.
Alkoxycarbonyl: Methoxycarbonyl, Ethoxycarbonyl, n-Propyloxycarbonyl, i-Propyloxycarbonyl und n-Butyloxycarbonyl; vorzugsweise Methoxycarbonyl und Ethoxycarbonyl.
Halogenbenzoyl: Chlorbenzoyl, insbesondere 4-Chlorbenzoyl.
$C_1$-$C_6$-Alkylen: Methylen, 1,2-Ethylen, 1,1-Ethylen, 1-Methyl-1,2-ethylen, 1-Ethyl-1,2-ethylen, 2-Methyl-1,2-ethylen, 1-(1-Methylethyl)-1,2-ethylen, 2-(1-Methylethyl)-1,2-ethylen, 1,2-Dimethyl-1,2-ethylen.
$C_3$-$C_4$-Alkenyloxy: in diesen Resten ist die Doppelbindung vorzugsweise allylisch zum Sauerstoffatom gebunden, also Allyloxy und But-2-enyloxy.

Bevorzugt sind als Verbindungen der Formel I die Verbindungen, in denen
$R^1$ Wasserstoff; Chlor; $C_1$-$C_4$-Alkyl; Methoxy; oder Trifluormethyl;
$R^2$ Wasserstoff; Methyl; oder Ethyl;
Z Wasserstoff; oder Methyl;
Y Methylen; 1,2-Ethylen; 1-Methyl-1,2-ethylen; 2-Methyl-1,2-ethylen; 1-Ethyl-1,2-ethylen; 1-(1-Methylethyl)-1,2-ethylen; oder 1,2-Dimethyl-1,2-ethylen;
$R^3$ $C_1$-$C_4$-Alkoxy; Allyloxy; Cyano; $C_1$-$C_2$-Alkoxycarbonyl; Acetylamino; N-Allylcarbamoyl; N,N-Dimethylcarbamoyl; Benzoyl; 4-Chlorbenzoyl; 1,3-Oxadiazol-2-yl; 1,3-Dioxolan-2-yl; Furan-2-yl; Tetrahydrofuran-2-yl; 1,3,4-Oxadiazol-2-yl, Pyrazol-1-yl; 3,5-Dimethyl-pyrazol-1-yl; 1,2,4-Triazol-1-yl; 5-Methyl-1,3,4-oxadiazol-2-yl; 4-Methyl-5-methylthio-1,2,4-triazol-3-yl; Isopropyl; Ethinyl; oder $(Ethoxy)_2CH$;
bedeutet.

Als einzelne Vertreter der Chloracetanilide der Formel I seien die folgenden hervorgehoben
N-Ethoxymethyl-N-chloracetyl-2-ethyl-6-methylanilin,
N-Chloracetyl-N-methoxymethyl-2,6-diethylanilin (Alachlor),
N-Chloracetyl-N-(2-methoxyethyl)-2,6-dimethylanilin,
N-(2-Allyloxyethyl)-N-chloracetyl-2,6-dimethylanilin,
N-Chloracetyl-N-(2-n-propoxyethyl)-2,6-dimethylanilin,
N-Chloracetyl-N-(2-isopropoxyethyl)-2,6-dimethylanilin,
N-Chloracetyl-N-(2-methoxyethyl)-2-ethyl-6-methylanilin,
N-Chloracetyl-N-(methoxyethyl)-2,6-diethylanilin,
N-(2-Ethoxyethyl)-N-chloracetyl-2-ethyl-6-methylanilin,
N-Chloracetyl-N-(2-methoxy-1-methylethyl)-2-methylanilin,
N-Chloracetyl-N-(2-methoxy-1-methylethyl)-2,6-dimethylanilin,
N-Chloracetyl-N-(2-methoxy-1-methylethyl)-2,6-diethylanilin,
N-Chloracetyl-N-(2-methoxy-1-methylethyl-2-ethyl-6-methylanilin (Metolachlor),
N-(2-Ethoxyethyl)-N-chloracetyl-2,6-diethylanilin,
N-Chloracetyl-N-(2-n-propoxyethyl)-2-ethyl-6-methylanilin,
N-Chloracetyl-N-(2-n-propoxyethyl)-2,6-diethylanilin,
N-Chloracetyl-N-(2-isopropoxyethyl)-2-ethyl-6-methylanilin,
N-Ethoxycarbonylmethyl-N-chloracetyl-2,6-dimethylanilin,
N-Ethoxycarbonylmethyl-N-chloracetyl-2,6-diethylanilin,
N-Chloracetyl-N-methoxycarbonylmethyl-2,6-dimethylanilin,
N-Chloracetyl-N-(2,2-diethoxyethyl)-2,6-dimethylanilin,
N-Chloracetyl-N-(2-methoxy-1-methylethyl)-2,3-dimethylanilin,
N-(2-Ethoxyethyl)-N-chloracetyl-2-methylanilin,
N-Chloracetyl-N-(2-methoxyethyl)-2-methylanilin,
N-Chloracetyl-N-(2-methoxy-2-methylethyl)-2,6-dimethylanilin,
N-(2-Ethoxy-2-methylethyl)-N-chloracetyl-2-ethyl-6-methylanilin,
N-Chloracetyl-N-(1-ethyl-2-methoxyethyl)-2,6-dimethylanilin,
N-Chloracetyl-N-(2-methoxyethyl)-2-methoxy-6-methylanilin,
N-n-Butoxymethyl-N-chloracetyl-2-tert.-butylanilin,
N-(2-Ethoxyethyl-1-methylethyl)-N-chloracetyl-2,6-dimethylanilin,
N-Chloracetyl-N-(2-methoxyethyl)-2-chlor-6-methylanilin,
N-(2-Ethoxyethyl)-N-chloracetyl-2-chlor-6-methylanilin,
N-(2-Ethoxyethyl)-N-chloracetyl-2,3,6-trimethylanilin,
N-Chloracetyl-N-(2-methoxyethyl)-2,3,6-trimethylanilin,
N-Chloracetyl-N-cyanomethyl-2,6-dimethylanilin,
N-But-3-in-1-yl-N-chloracetylanilin,
N-Chloracetyl-N-propargyl-2-ethyl-6-methylanilin,

N-Chloracetyl-N-(1,3-dioxolan-2-ylmethyl)-2,6-dimethylanilin,
N-Chloracetyl-N-(1,3-dioxolan-2-ylmethyl)-2-ethyl-6-methylanilin,
N-Chloracetyl-N-(1,3-dioxan-2-ylmethyl)-2-ethyl-6-methylanilin,
N-Chloracetyl-N-(2-fuanylmethyl)-2,6-dimethylanilin,
N-Chloracetyl-N-(furanylmethyl)-2-ethyl-6-methylanilin,
N-Chloracetyl-N-(2-tetrahydrofuranylmethyl)-2,6-dimethylanilin,
N-Chloracetyl-N-(N-propargylcarbamoylmethyl)-2,6-dimethylanilin,
N-Chloracetyl-N-(N,N-dimethylcarbamoylmethyl)-2,6-dimethylanilin,
N-(n-Butoxymethyl)-N-chloracetyl-2,6-diethylanilin,
N-(2-n-Butoxyethyl)-N-chloracetyl-2,6-diethylanilin,
N-Chloracetyl-N-(2-methoxy-1,2-dimethylethyl)-2,6-dimethylanilin,
N-Chloracetyl-N-isopropyl-2,3-dimethylanilin,
N-Chloracetyl-N-isopropyl-2-chloranilin,
N-Chloracetyl-N-(1H-pyrazol-1-ylmethyl)-2,6-dimethylanilin (Metazachlor),
N-Chloracetyl-N-(1H-pyrazol-1-ylmethyl)-2-ethyl-6-methylanilin,
N-Chloracetyl-N-(1H-1,2,4-triazol-1-ylmethyl)-2,6-dimethylanilin,
N-Chloracetyl-N-(1H-1,2,4-triazol-1-ylmethyl)-2,6-diethylanilin,
N-Benzoylmethyl-N-chloracetyl-2,6-dimethylanilin,
N-Benzoylmethyl-N-chloracetyl-2-ethyl-6-methylanilin,
N-Chloracetyl-N-(5-methyl-1,3,4-oxadiazol-2-yl)-2,6-diethylanilin,
N-Chloracetyl-N-(5-methyl-1,3,4-oxadiazol-2-yl)-2-ethyl-6-methylanilin,
N-Chloracetyl-N-(5-methyl-1,3,4-oxadiazol-2-yl)-2-tert.butylanilin,
N-Chloracetyl-N-(4-chlorbenzoylmethyl)-2,6-dimethylanilin,
N-Chloracetyl-N-(1-methyl-5-methylthio-1,3,4-triazol-2-ylmethyl)-2,6-diethylanilin,
N-Chloracetyl-N-ethoxymethyl-6-methyl-2-trifluormethylanilin (Harmony) und
N-Chloracetyl-N-acetamidomethyl-2,6-diethylanilin (Amidochlor).

Besonders bevorzugt sind
N-Chloracetyl-N-methoxymethyl-2,6-diethylanilin (Alachlor),
N-Chloracetyl-N-(2-methoxy-1-methylethyl)-2-ethyl-6-methylanilin (Metolachlor) und
N-Chloracetyl-N-(1H-pyrazol-1-ylmethyl)-2,6-dimethylanilin (Metazachlor).

Als N-Chloracetylcyclohexenamine sind die Verbindungen der Formel II bevorzugt, worin
$R^5$ $C_1$-$C_4$-Alkyl, oder $C_3$-$C_4$-Alkenyl, und
$R^6$, $R^7$, $R^8$ und $R^9$ unabhängig voneinander Wasserstoff oder $C_1$-$C_2$-Alkyl bedeutet.

Hervorzuheben sind die Verbindungen der Formel II worin
$R^5$ $C_1$-$C_4$-Alkyl, oder $C_3$-$C_4$-Alkenyl, und
$R^6$, $R^7$, $R^8$ und $R^9$ unabhängig voneinander Wasserstoff oder Methyl bedeutet.

Besonders bevorzugt sind
N-Isopropyl-N-chloracetylcyclohex-1-enamin,
N-Isopropyl-N-chloracetyl-3(5)-methylcyclohex-1-enamin,
N-Isopropyl-N-chloracetyl-3,5,5(3)-trimethylcyclohex-1-enamin (Trimexachlor),
N-Isopropyl-N-chloracetyl-3,3,5,5-tetramethylcyclohex-1-enamin und
N-Allyl-N-chloracetyl-3,3,5,5-tetramethylcyclohex-1-enamin,
insbesondere aber
N-Isopropyl-N-chloracetyl-3,5,5(3)-trimethylcyclohex-1-enamin (Trimexachlor).

Als Kulturpflanzen gelten im Rahmen vorliegender Erfindung alle Pflanzen, die in irgendeiner Form Ertragsstoffe, wie Samen, Wurzeln, Stengel, Knollen, Blätter, Blüten, ferner Inhaltsstoffe, wie Oele, Zucker, Stärke, Eiweiss usw., produzieren und zu diesem Zweck angebaut werden. Zu diesen Pflanzen gehören beispielsweise sämtliche Getreidearten, wie Weizen, Roggen, Gerste und Hafer, daneben vor allem Reis, Sorghum, Mais, Baumwolle, Zuckerrüben, Erdnüsse, Zuckerrohr, Soja, Bohnen, Sonnenblumen und Erbsen.

Insbesondere ist die erfindungsgemässe Wirkstofkombination zur Bekämpfung von Unkräutern in Mais-, Reis-, Sorghum-, Soja-, Zuckerrüben-, Baumwoll-, Sonnenblumen- und Erdnuss-Kulturen geeignet.

Für die vorstehend genannten Zielkulturen sind die Kombinationen der als Einzelverbindungen genannten Halogenacetanilide der Formel I und der als Einzelverbindungen genannten N-Chloracetylcyclohexenamine der Formel II in besonderem Masse geeignet.

Besonders hervorzuheben sind nachstehende Kombinationen:

a) N-Chloracetyl-N-methoxymethyl-2,6-diethylanilin und N-Isopropyl-N-chloracetyl-3,5,5(3)-trimethylcyclohex-1-enamin,

b) N-Chloracetyl-N-(2-methoxy-1-methylethyl)-2-ethyl-6-methylanilin und N-Isopropyl-N-chloracetyl-2,5,5(3)-trimethylcyclohex-1-enamin und

c) N-Chloracetyl-N-(1H-pyrazol-1-ylmethyl)-2,6-dimethylanilin und N-Isopropyl-N-chloracetyl-3,5,5(3)-trimethylcyclohex-1-enamin.

Die erfindungsgemässen Wirkstoffkombinationen können sowohl pre- als auch postemergent verwendet werden. Ausserdem kann das Saatgut der Nutzpflanze mit einer herbizid wirksamen Menge erfindungsgemässen Wirkstoffkombina tion behandelt werden (Samenbeizung). Bei der Aussaat der Nutzpflanzen wird so die erfindungsgemässe Wirkstoffkombination ausgebracht.

Es ist in hohem Masse überraschend, dass die Kombination des Wirkstoffs der Formel I mit einem Wirkstoff der Formel II nicht nur eine prinzipiell zu erwartende additive Ergänzung des Wirkungsspektrums auf die üblichen mit der jeweiligen Kulturpflanze vergesellschafteten Unkräuter hervorruft, sondern dass sie einen synergistischen Effekt erzielt, der die Wirkungsgrenzen der miteinander kombinierten Aktivsubstanzen unter zwei Aspekten erweitert.

Einmal werden die Aufwandmengen der Einzelverbindungen I und II bei gleichbleibend guter Wirkung deutlich gesenkt. Zum anderen erzielt die kombinierte Mischung auch dort noch einen hohen Grad der Unkraut-Bekämpfung, wo beide Einzelverbindungen im Bereich allzu geringer Aufwandmengen völlig wirkungslos geworden sind. Dies hat eine wesentliche Verbreiterung des Unkrautsprektrums und eine zusätzliche Erhöhung der Sicherheitsmarge auf die jeweilige Kulturpflanze zur Folge, wie sie für unbeabsichtigte Wirkstoffüberdosierung notwendig und erwünscht ist. Ausserdem wurde gefunden, dass bei einigen Unkräutern die Langzeitwirkung der Mischung die der Einzelkomponenten übersteigt.

Das für die gewünschte Anwendung optimale Mischungsverhältnis der einzelnen Wirkstoffkomponenten kann durch biologische Versuche ermittelt werden. Dabei können die Verhältnisse der einzelnen Wirkstoffkomponenten je nach Art des zu bekämpfenden Unkrauts und in Abhängigkeit von der jeweiligen Applikationsform variieren.

Obwohl somit das Mischungsverhältnis in weiten Bereichen frei gewählt werden kann, sind Mischungen der Verbindungen der Formel I mit solchen der Formel II bevorzugt, in denen das Gewichtsverhältnis der Einzelkomponenten I:II von 5:1 bis 1:5 variiert.

Besonders bevorzugt ist der Bereich von 2:1 bis 1:2. Besonders hervorzuheben sind Mischungen äquivalenter oder nahezu äquivalenter (wie etwa im Bereich 1,5:1 bis 1:1,5) Gewichtsteile beider Wirkstoffkomponenten.

Die erfindungsgemässen Wirkstoffkombinationen zeigen eine ausgeichnete Wirkung gegen Unkräuter, ohne die Nutzpflanzenkultur nennenswert zu beeinflussen bei 0,1 bis 5,0 kg vorzugsweise 0,25 bis 4,0 kg Aufwandmenge Aktivsubstanz je Hektar.

Die Formulierungen, d.h. die das erfindungsgemässe Wirkstoffgemisch und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln oder andere Flüssigkeiten, in denen die Wirkstoffe dispergierbar sind, festen Trägerstoffen und gegebenenfalls oberflächenaktiven Verbindungen (Tensiden).

Als Lösungs- oder Dispergiermittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- ode Dioctyphthalat, aliphatische Kohlenwaserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle vewendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materilien anorganischer oder organischer Natur wie insbesondere Dolomit oder zerkleinerte Pflanzenrückstände, wie z.B. Korkmehl oder Sägemehl, verwendet werden.

Besonders vorteilhafte, applikationsfördernde Zusatzstoffe, die zu einer starken Reduktion der Aufwandmenge führen können, sind ferner natürliche (tierische oder pflanzliche) oder synthetische Phospholipide aus der Reihe der Kephaline und Lecithine, wie z.B. Phosphatidyläthanolamin, Phosphatidylserin, Phosphtidylcholin, Sphingomyelin, Phosphatidylinosit, Phosphatidylglycerin, Lysolecithin, Plasmalogene oder Cardiolipin, die man beispielsweise aus tierischen oder pflanzlichen Zellen, insbesondere Hirn, Herz, Lunge, Leber, Eidotter oder Sojabohnen gewinnen kann. Verwendbare Handelsmischungen sind z.B. Phosphatidylcholin-Mischungen. Synthetische Phospholipide sind z.B. Dioctanoylphosphatidylcholin und Dipalmititoylphosphatidylcholin.

Als oberflächenaktive Verbindungen kommen nichtionogene, kation-und/oder anionaktive Tenside in guten Emulgier-, Dispergier- und Netzeigenschaften in Betracht. Unter Tensiden sind auch Tensidgemische zu verstehen.

Geeignete anionische Tenside können sowohl sogenannte wasserlösliche Seifen, als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z.B. die Na-oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters

oder eines aus natürlichen Fettsäuren hergestellten Fettalkoholsulfatgemisches. Hierher gehören auch die Salze der Schwefelsäureester und Sulfonsäuren von Fettalkohol-Aethylen oxid-Addukten. Die sulfonierten Benzimidazolderivate enthalten vorzugsweise 2-Sulfonsäuregruppen und einen Fettsäurerest mit 8-22 C-Atomen. Alkylarylsulfonate sind z.B. die Na-, Ca- oder Triäthanolaminsalze der Dodecylbenzolsulfonsäure, 2er Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Aethylenoxid-Adduktes in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkyl reste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthyl-ammoniumbromid.

Die in der Formulierungstechnik gebräuchlichen Tenside sind u.a. in folgenden Publikationen beschreiben:
"1985 International Mc Cutcheon's Emulsifiers & Detergents", Glen Rock NJ USA, 1985",
"H. Stache, "Tensid-Taschenbuch", 2. Aufl., C. Hanser Verlag München, Wien 1981,
M. and J. Ash. "Encyclopedia of Surfactants", vol. I-III, Chemical Publishing Co., New York, 1980-1981.

Die agrochemischen Zubereitungen enthalten in der Regel 0,1 bis 95 %, insbesondere 0,1 bis 80 %, Wirkstoffgemisch der Formeln I und II 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen: (% = Gewichtsprozent)

Emulgierbare Konzentrate

| | |
|---|---|
| Aktives Wirkstoffgemisch: | 1 bis 20 %, bevorzugt 5 bis 10 % |
| oberflächenaktives Mittel: | 5 bis 30 %, vorzugsweise 10 bis 20 % |
| flüssiges Trägermittel: | 50 bis 94 %, vorzugsweise 70 bis 85 % |

Stäube:

| | |
|---|---|
| Aktives Wirkstoffgemisch: | 0,1 bis 10 %, vorzugsweise 0,1 bis 1 % |
| festes Trägermittel: | 99,9 bis 90 %, vorzugsweise 99,9 bis 99 %. |

Suspension-Konzentrate

| | |
|---|---|
| Aktives Wirkstoffgemisch: | 5 bis 75 %, vorzugsweise 10 bis 50 % |
| Wasser: | 94 bis 25 %, vorzugsweise 88 bis 30 % |
| oberflächenaktives Mittel: | 1 bis 40 %, vorzugsweise 2 bis 30 % |

Benetzbare Pulver

| | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

Granulate

| | |
|---|---|
| aktives Wirkstoffgemisch: | 0,5 bis 30 %, vorzugsweise 3 bis 15 % |
| festes Trägermittel: | 99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden.

Neben den hier genannten bevorzugten Formulierungen als emulgierbare Konzentrate, Stäube, Suspensionskonzentrate, benetzbare Pulver und Granulate, können die erfindungsgemässen Kombinationen auch als Mikrokapseln gemäss der am 07.09.1988 veröffentlichten EP-A-0 281 521 formuliert werden.

Den beschriebenen erfindungsgemässen Mitteln lassen sich andere biozide Wirkstoffe oder Mittel beimischen. So können die neuen Mittel ausser den genannten Verbindungen der allgemeinen Formel I und der Formeln II z.B. Insektizide, Fungizide, Bakterizide, Fungistatika, Bakteriostatika oder Nematizide zur Verbreiterung des Wirkungsspektrums enthalten.

Im Einzelnen lassen sich die erfindungsgemässen Mittel allgemein nach den folgenden Beispielen formulieren:

Formulierungsbeispiele

Beispiel F1:

Formulierungsbeispiele für synergistische Wirkstoffgemische der Formeln I und II (% = Gewichtsprozent)

| a) Spritzpulver | a) | b) | c) | d) |
|---|---|---|---|---|
| Wirkstoff der Formel I | 10 % | 20 % | 15 % | 30 % |
| Wirkstoff der Formel II | 10 % | 40 % | 5 % | 30 % |
| Na-Ligninsulfonat | 5 % | 5 % | 5 % | 5 % |
| Na-Laurylsulfat | 3 % | - | 3 % | - |
| Na-Diisobutyl-naphthalinsulfonat | - | 6 % | - | 6 % |
| Octylphenolpoly-äthylenglykoläther 7-8 Mol AeO) | - | 2 % | - | 2 % |
| Hochdisperse Kieselsäure | 5 % | 27 % | 5 % | 27 % |
| Kaolin | 67 % | - | 67 % | - |

Das Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| b) Emulsions-Konzentrat | a) | b) | c) | d) | e) |
|---|---|---|---|---|---|
| Wirkstoff der Formel I | 5 % | 15 % | 12 % | 25 % | 30 % |
| Wirkstoff der Formel II | 5 % | 10 % | 13 % | 25 % | 30 % |
| Octylphenolpolyäthylenglykoläther (4-5 Mol AeO) | 3 % | 3 % | 3 % | 3 % | 3 % |
| Ca-Dodecylbenzolsulfonat | 3 % | 3 % | 2 % | 5 % | 5 % |
| Ricinusölpolyglykoläther (36 Mol AeO) | 4 % | 4 % | 4 % | 4 % | 4 % |
| Cyclohexanon | 30 % | 30 % | 31 % | 15 % | 10 % |
| Xylolgemisch | 50 % | 35 % | 35 % | 13 % | 8 % |

Aus diesen Konzentraten können durch Verdünnen mit Wasser Emulsionen jeder gewünschten Konzentration hergestellt werden.

| c) Stäubemittel | a) | b) | c) | d) |
|---|---|---|---|---|
| Wirkstoff der Formel I | 2 % | 4 % | 2 % | 8 % |
| Wirkstoff der Formel II | 3 % | 4 % | 4 % | 4 % |
| Talkum | 95 % | - | 94 % | - |
| Kaolin | - | 92 % | - | 88 % |

Man erhält anwendungsfertige Stäubemittel, indem das Wirkstoffgemisch mit dem Träger vermischt und auf einer geeigneten Mühle vermahlen wird.

| d) Extruder Granulat | a) | b) | c) |
| --- | --- | --- | --- |
| Wirkstoff der Formel I | 5 % | 3 % | 10 % |
| Wirkstoff der Formel II I | 5 % | 7 % | 10 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschliessend im Luftstrom getrocknet.

| e) Umhüllungs-Granulat | a) | b) |
| --- | --- | --- |
| Wirkstoff der Formel I | 1,5 % | 3 % |
| Wirkstoff der Formel II | 1,5 % | 5 % |
| Polyäthylenglykol (MG 200) | 3 % | 3 % |
| Kaolin | 94 % | 89 % |

Das fein gemahlene Wirkstoffgemisch wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) | c) |
|---|---|---|---|
| Wirkstoff der Formel I | 20 % | 20 % | 40 % |
| Wirkstoff der Formel II | 20 % | 40 % | 20 % |
| Aethylenglykol | 10 % | 10 % | 10 % |
| Nonylphenolpolyäthylenglykoläther (15 Mol AeO) | 6 % | 6 % | 6 % |
| Na-Ligninsulfonat | 10 % | 10 % | 10 % |
| Carboxymethylcellulose | 1 % | 1 % | 1 % |
| 37 %ige wässrige Formaldehyd-Lösung | 0,2 % | 0,2 % | 0,2 % |
| Silikonöl in Form einer 75 %igen wässrigen Emulsion | 0,8 % | 0,8 % | 0,8 % |
| Wasser | 32 % | 12 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Ein synergistischer Effekt liegt bei Herbiziden immer dann vor, wenn die herbizide Wirkung der Wirkstoffkombination I und II grösser ist als die Summe der Wirkung der einzeln applizierten Wirkstoffe.

Die zu erwartende herbizide Wirkung WE für eine gegebene Kombination zweier Herbizide kann (vgl. COLBY, S.R., "Calculating synergistic and antagonistic response of herbicide combinations", Weeds 15, Seiten 20-22, 1967) wie folgt berechnet werden:

$$WE = X + \frac{Y \cdot (100-X)}{100}$$

Dabei bedeuten:

X = Prozent Wachstumshemmung bei Behandlung mit einem Herbizid I mit p kg Aufwandmenge pro Hektar im Vergleich zur unbehandelten Kontrolle (= 0 %).

Y = Prozent Wachstumshemmung bei Behandlung mit einem Herbizid II mit q kg Aufwandmenge pro Hektar im Vergleich zur unbehandelten Kontrolle

WE = Erwartete herbizide Wirkung (Prozent Wachstumshemmung im Vergleich zur unbehandelten Kontrolle) nach Behandlung mit Herbizidgemisch I und II bei einer Aufwandmenge von p + q kg Wirkstoffmenge pro Hektar.

Ist die tatsächlich beobachtete Wirkung grösser als der zu erwartende Wert WE, so liegt Synergismus vor.

Der synergistische Effekt der Kombinationen der Wirkstoffe I und II wird in den folgenden Beispielen demonstriert.

Biologische Beispiele:

Beispiel B1: Preemergenter Versuch

Methodik

Die Pflanzensamen werden in Plastiktöpfen, die 0,5 l Erde enthalten, im Gewächshaus ausgesät. Die Herbizide werden einzeln oder als Tankmischung aus 2 Produkten nach der Saat aber vor dem Auflaufen der Pflanzen appliziert.

Die biologische Wirkung wird in Prozent Unkrautbekämpfung im Vergleich zu unbehandelten Kontrollpflanzen 21 Tage nach Applikation bonitiert. Nach der Formel von Colby wird ermittelt, ob die Mischungen eine synergistische Wirkungssteigerung im Vergleich zu den Einzelprodukten erzielen.

Die Resultate zeigen eine teilweise sehr deutliche synergistische Wirkungssteigerung der Mischungen.

Tabelle 1a

Synergistische Wirkung von Trimexachlor in Tankmischung mit Metolachlor

| Behandlung | Trimexachlor 125 g AS/ha + Metolachlor 125 g AS/ha | |
|---|---|---|
| Pflanzenart | WE | W |
| Sorghum halepense | 87 | 99 |
| Alopecurus myosuroides | 85 | 95 |
| Amaranthus retroflexus | 73 | 95 |

WE = Erwartungswert nach Colby

W = gemessener Wert

Tabelle 1b

Wirkung der Einzelkomponenten

| | Trimexachlor 125 g AS/ha | Metolachlor 125 g AS/ha |
|---|---|---|
| Sorghum halepense | 85 | 10 |
| Alopecurus myosuroides | 85 | 0 |
| Amaranthus retroflexus | 10 | 70 |

Tabelle 2a

Synergistische Wirkung von Trimexachlor in Tankmischung mit Alachlor

| Behandlung | Trimexachlor 125 g AS/ha + Alachlor 125 g AS/ha | |
|---|---|---|
| Pflanzenart | WE | W |
| Sorghum halepense | 88 | 100 |
| Alopecurus myosuroides | 87 | 97 |
| Cyperus esculentus | 64 | 80 |

WE = Erwartungswert nach Colby

W = gemessener Wert

Tabelle 2b

Wirkung der Einzelkomponenten

| | Trimexachlor 125 g AS/ha | Alachlor 125 g AS/ha |
|---|---|---|
| Sorghum halepense | 85 | 20 |
| Alopecurus myosuroides | 85 | 10 |
| Cyperus esculentus | 40 | 40 |

Tabelle 3a

Synergistische Wirkung von Trimexachlor in Tankmischung mit Metazachlor

| Behandlung | Trimexachlor 62,5 g AS/ha + Metazachlor 62,5 g AS/ha | |
|---|---|---|
| Pflanzenart | WE | W |
| Sorghum halepense | 55 | 95 |
| Solanum nigrum | 95 | 100 |
| Amaranthus retroflexus | 90 | 100 |

WE = Erwartungswert nach Colby

W = gemessener Wert

Tabelle 3b

Wirkung der Einzelkomponenten

| | Trimexachlor 62,5 g AS/ha | Metazachlor 62,5 g AS/ha |
|---|---|---|
| Sorghum halepense | 50 | 10 |
| Solanum nigrum | 0 | 95 |
| Amaranthus retroflexus | 0 | 90 |

Beispiel B2: Preemergenter Versuch, Dauerwirkung gegen Echinochloa

Methodik

Nach einmaliger Applikation des Wirkstoffs oder der Wirkstoffmischung auf aktiven Boden werden die Töpfe bei Raumtemperatur belassen und es wird direkt nach der Applikation und danach in wöchentlichem Abstand Echinochloa crus galli ausgesät.

Die Wirkung auf die Pflanze der jeweiligen Aussaat wird 2 Wochen nach der Saat in % Aktivität im Vergleich zur unbehandelten Kontrolle ausgewertet.

Die Ergebnisse dieses Versuchs sind in Tabelle 4 zusammengefasst.

Tabelle 4

| | | Wochen nach Applikation | | | | | | | |
|---|---|---|---|---|---|---|---|---|---|
| | g AS/ha | 0 | 1 | 2 | 3 | 4 | 5 | 6 | 7 |
| Trimexachlor | 250 | 100* | 40 | 0 | | | | | |
| | 500 | 100 | 95 | 10 | 0 | | | | |
| Metolachlor | 250 | 100 | 98 | 95 | 90 | 90 | 0 | | |
| | 500 | 100 | 100 | 98 | 98 | 95 | 70 | 20 | 0 |
| Trimexachlor + Metolachlor | 125 + 125 | 100 | 100 | 95 | 95 | 95 | 80 | 70 | 0 |
| Trimexachlor + Metolachlor | 250 + 250 | 100 | 100 | 100 | 98 | 98 | 95 | 95 | 40 |

* Prozent Aktivität gegen Echinochloa

**Patentansprüche**

1. Herbizides Mittel enthaltend als Wirkstoff ein Chloracetanilid der Formel I

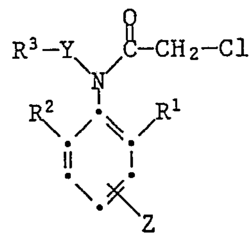

(I)

worin $R^1$ und $R^2$ unabhängig voneinander Wasserstoff; Halogen; $C_1$-$C_4$-Alkyl; $C_1$-$C_4$-Alkoxy; $C_1$-$C_4$-Halogenalkyl; oder $C_1$-$C_4$-Alkoxy-$C_1$-$C_4$-alkyl;
Z Wasserstoff; Halogen; oder $C_1$-$C_4$-Alkyl;
Y $C_1$-$C_6$-Alkylen;
$R^3$ $C_1$-$C_4$-Alkoxy; $C_3$-$C_4$-Alkenyloxy; Cyano; $C_1$-$C_4$-Alkoxycarbonyl; $C_1$-$C_4$-Alkyl-CO-NH-; $(R^4)_2N$-CO-; Benzoyl; Halogenbenzoyl; einen gegebenenfalls bis zu zweifach gleich oder verschieden durch $C_1$-$C_4$-Alkyl substituiertes 1,3-Oxadiazol-2-yl, 1,3-Dioxolan-2-yl, Furan-2-yl, Tetrahydrofuran-2-yl, 1,3,4-Oxadiazol-2-yl, Pyrazol-1-yl, 1,2,4-Triazol-1-yl oder 1,2,4-Triazol-3-yl; $(C_1$-$C_4$-Alkoxy$)_2$CH-; $C_1$-$C_4$-Alkyl; Ethinyl; oder 4-Methyl-5-methylthio-1,2,4-triazol-3-yl;
$R^4$ unabhängig voneinander je Wasserstoff, $C_1$-$C_4$-Alkyl; $C_1$-$C_4$-Alkenyl; oder $C_1$-$C_4$-Alkinyl bedeutet neben einer synergistisch wirksamen Menge eines N-Chloracetylcyclohexenamins der Formel II

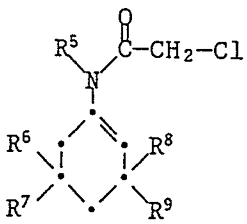

(II)

worin
$R^5$ $C_1$-$C_6$-Alkyl; oder $C_3$-$C_6$-Alkenyl; und
$R^6$, $R^7$, $R^8$ und $R^9$ unabhängig voneinander Wasserstoff; oder $C_1$-$C_4$-Alkyl;
bedeutet.

2. Mittel gemäss Anspruch 1, enthaltend eine Verbindung der Formel I, worin
$R^1$ Wasserstoff; Chlor; $C_1$-$C_4$-Alkyl; Methoxy; oder Trifluormethyl;
$R^2$ Wasserstoff; Methyl; oder Ethyl;
Z Wasserstoff; oder Methyl;
Y Methylen; 1,2-Ethylen; 1-Methyl-1,2-ethylen; 2-Methyl-1,2-ethylen; 1-Ethyl-1,2-ethylen; 1-(1-Methylethyl)-1,2-ethylen; oder 1,2-Dimethyl-1,2-ethylen;
$R^3$ $C_1$-$C_4$-Alkoxy; Allyloxy; Cyano; $C_1$-$C_2$-Alkoxycarbonyl; Acetylamino; N-Allylcarbamoyl; N,N-Dimethylcarbamoyl; Benzoyl; 4-Chlorbenzoyl; 1,3-Oxadiazol-2-yl; 1,3-Dioxolan-2-yl; Furan-2-yl; Tetrahydrofuran-2-yl; 1,3,4-Oxadiazol-2-yl; Pyrazol-1-yl; 3,5-Dimethyl-pyrazol-1-yl; 1,2,4-Triazol-1-yl; 5-Methyl-1,3,4-oxadiazol-2-yl; 4-Methyl-5-methylthio-1,2,4-triazol-3-yl; Isopropyl; Ethinyl; oder $(Ethoxy)_2$CH;
bedeutet.

3. Mittel gemäss einem der Ansprüche 1 oder 2, enthaltend
N-Ethoxymethyl-N-chloracetyl-2-ethyl-6-methylanilin,
N-Chloracetyl-N-methoxymethyl-2,6-diethylanilin (Alachlor),
N-Chloracetyl-N-(2-methoxyethyl)-2,6-dimethylanilin,
N-(2-Allyloxyethyl)-N-chloracetyl-2,6-dimethylanilin,
N-Chloracetyl-N-(2-n-propoxyethyl)-2,6-dimethylanilin,
N-Chloracetyl-N-(2-isopropoxyethyl)-2,6-dimethylanilin,
N-Chloracetyl-N-(2-methoxyethyl)-2-ethyl-6-methylanilin,
N-Chloracetyl-N-(methoxyethyl)-2,6-diethylanilin,
N-(2-Ethoxyethyl)-N-chloracetyl-2-ethyl-6-methylanilin,
N-Chloracetyl-N-(2-methoxy-1-methylethyl)-2-methylanilin,
N-Chloracetyl-N-(2-methoxy-1-methylethyl)-2,6-dimethylanilin,
N-Chloracetyl-N-(2-methoxy-1-methylethyl)-2,6-diethylanilin,
N-Chloracetyl-N-(2-methoxy-1-methylethyl)-2-ethyl-6-methylanilin (Metolachlor),
N-(2-Ethoxyethyl)-N-chloracetyl-2,6-diethylanilin,
N-Chloracetyl-N-(2-n-propoxyethyl)-2-ethyl-6-methylanilin,
N-Chloracetyl-N-(2-n-propoxyethyl)-2,6-diethylanilin,
N-Chloracetyl-N-(2-isopropoxyethyl)-2-ethyl-6-methylanilin,
N-Ethoxycarbonylmethyl-N-chloracetyl-2,6-dimethylanilin,
N-Ethoxycarbonylmethyl-N-chloracetyl-2,6-diethylanilin,

N-Chloracetyl-N-methoxycarbonylmethyl-2,6-dimethylanilin,
N-Chloracetyl-N-(2,2-diethoxyethyl)-2,6-dimethylanilin,
N-Chloracetyl-N-(2-methoxy-1-methylethyl)-2,3-dimethylanilin,
N-(2-Ethoxyethyl)-N-chloracetyl-2-methylanilin,
N-Chloracetyl-N-(2-methoxyethyl)-2-methylanilin,
N-Chloracetyl-N-(2-methoxy-2-methylethyl)-2,6-dimethylanilin,
N-(2-Ethoxy-2-methylethyl)-N-chloracetyl-2-ethyl-6-methylanilin,
N-Chloracetyl-N-(1-ethyl-2-methoxyethyl)-2,6-dimethylanilin,
N-Chloracetyl-N-(2-methoxyethyl)-2-methoxy-6-methylanilin,
N-n-Butoxymethyl-N-chloracetyl-2-tert.-butylanilin,
N-(2-Ethoxyethyl-1-methylethyl)-N-chloracetyl-2,6-dimethylanilin,
N-Chloracetyl-N-(2-methoxyethyl)-2-chlor-6-methylanilin,
N-(2-Ethoxyethyl)-N-chloracetyl-2-chlor-6-methylanilin,
N-(2-Ethoxyethyl)-N-chloracetyl-2,3,6-trimethylanilin,
N-Chloracetyl-N-(2-methoxyethyl)-2,3,6-trimethylanilin,
N-Chloracetyl-N-cyanomethyl-2,6-dimethylanilin,
N-But-3-in-1-yl-N-chloracetylanilin,
N-Chloracetyl-N-propargyl-2-ethyl-6-methylanilin,
N-Chloracetyl-N-(1,3-dioxolan-2-ylmethyl)-2,6-dimethylanilin,
N-Chloracetyl-N-(1,3-dioxolan-2-ylmethyl)-2-ethyl-6-methylanilin,
N-Chloracetyl-N-(1,3-dioxan-2-ylmethyl)-2-ethyl-6-methylanilin,
N-Chloracetyl-N-(2-fuanylmethyl)-2,6-dimethylanilin,
N-Chloracetyl-N-(2-furanylmethyl)-2-ethyl-6-methylanilin,
N-Chloracetyl-N-(2-tetrahydrofuranylmethyl)-2,6-dimethylanilin,
N-Chloracetyl-N-(N-propargylcarbamoylmethyl)-2,6-dimethylanilin,
N-Chloracetyl-N-(N,N-dimethylcarbamoylmethyl)-2,6-dimethylanilin,
N-(n-Butoxymethyl)-N-chloracetyl-2,6-diethylanilin,
N-(2-n-Butoxyethyl)-N-chloracetyl-2,6-diethylanilin,
N-Chloracetyl-N-(2-methoxy-1,2-dimethylethyl)-2,6-dimethylanilin,
N-Chloracetyl-N-isopropyl-2,3-dimethylanilin,
N-Chloracetyl-N-isopropyl-2-chloranilin,
N-Chloracetyl-N-(1H-pyrazol-1-ylmethyl)-2,6-dimethylanilin (Metazachlor),
N-Chloracetyl-N-(1H-pyrazol-1-ylmethyl)-2-ethyl-6-methylanilin,
N-Chloracetyl-N-(1H-1,2,4-triazol-1-ylmethyl)-2,6-dimethylanilin,
N-Chloracetyl-N-(1H-1,2,4-triazol-1-ylmethyl)-2,6-diethylanilin,
N-Benzoylmethyl-N-chloracetyl-2,6-dimethylanilin,
N-Benzoylmethyl-N-chloracetyl-2-ethyl-6-methylanilin,
N-Chloracetyl-N-(5-methyl-1,3,4-oxadiazol-2-yl)-2,6-diethylanilin,
N-Chloracetyl-N-(5-methyl-1,3,4-oxadiazol-2-yl)-2-ethyl-6-methylanilin,
N-Chloracetyl-N-(5-methyl-1,3,4-oxadiazol-2-yl)-2-tert.butylanilin,
N-Chloracetyl-N-(4-chlorbenzoylmethyl)-2,6-dimethylanilin,
N-Chloracetyl-N-(1-methyl-5-methylthio-1,3,4-triazol-2-ylmethyl)-2,6-diethylanilin,
N-Chloracetyl-N-ethoxymethyl-6-methyl-2-trifluormethylanilin (Harmony)
oder
N-Chloracetyl-N-acetamidomethyl-2,6-diethylanilin (Amidochlor)
als Verbindung der Formel I.

4. Mittel gemäss Anspruch 3, enthaltend
N-Chloracetyl-N-methoxymethyl-2,6-diethylanilin (Alachlor),
N-Chloracetyl-N-(2-methoxy-1-methylethyl)-2-ethyl-6-methylanilin (Metolachlor) oder
N-Chloracetyl-N-(1H-pyrazol-1-ylmethyl)-2,6-dimethylanilin (Metazachlor) als Verbindung der Formel I.

5. Mittel gemäss einem der Ansprüche 1 bis 4, enthaltend eine Verbindung der Formel II, worin
$R^5$ $C_1$-$C_4$-Alkyl, oder $C_3$-$C_4$-Alkenyl, und
$R^6$, $R^7$, $R^8$ und $R^9$ unabhängig voneinander Wasserstoff oder $C_1$-$C_2$-Alkyl bedeutet.

6. Mittel gemäss einem der Ansprüche 1 bis 5, enthaltend eine Verbindung der Formel II, worin
$R^5$ $C_1$-$C_4$-Alkyl, oder $C_3$-$C_4$-Alkenyl, und
$R^6$, $R^7$, $R^8$ und $R^9$ unabhängig voneinander Wasserstoff oder Methyl bedeutet.

7. Mittel gemäss einem der Ansprüche 1 bis 6, enthaltend
N-Isopropyl-N-chloracetylcyclohex-1-enamin,
N-Isopropyl-N-chloracetyl-3(5)-methylcyclohex-1-enamin,
N-Isopropyl-N-chloracetyl-3,5,5(3)-trimethylcyclohex-1-enamin (Trimexachlor),
N-Isopropyl-N-chloracetyl-3,3,5,5-tetramethylcyclohex-1-enamin oder
N-Allyl-N-chloracetyl-3,3,5,5-tetramethylcyclohex-1-enamin
als Verbindung der Formel II.

8. Mittel gemäss Anspruch 1, enthaltend
N-Chloracetyl-N-methoxymethyl-2,6-diethylanilin (Alachlor),

N-Chloracetyl-N-(2-methoxy-1-methylethyl)-2-ethyl-6-methylanilin (Metolachlor) oder N-Chloracetyl-N-(1H-pyrazol-1-ylmethyl)-2,6-dimethylanilin (Metazachlor) als Verbindung der Formel I und
N-Isopropyl-N-chloracetylcyclohex-1-enamin,
N-Isopropyl-N-chloracetyl-3(5)-methylcyclohex-1-enamin,
N-Isopropyl-N-chloracetyl-3,5,5(3)-trimethylcyclohex-1-enamin (Trimexachlor),
N-Isopropyl-N-chloracetyl-3,3,5,5-tetramethylcyclohex-1-enamin oder
N-Allyl-N-chloracetyl-3,3,5,5-tetramethylcyclohex-1-enamin
als Verbindung der Formel II.

9. Mittel gemäss Anspruch 8, enthaltend N-Chloracetyl-N-methoxymethyl-2,6-diethylanilin und N-Isopropyl-N-chloracetyl-3,5,5(3)-trimethylcyclohex-1-enamin.

10. Mittel gemäss Anspruch 8, enthaltend N-Chloracetyl-N-(2-methoxy-1-methylethyl)-2-ethyl-6-methylanilin und N-Isopropyl-N-chloracetyl-2,5,5(3)-trimethylcyclohex-1-enamin.

11. Mittel gemäss Anspruch 8, enthaltend N-Chloracetyl-N-(1H-pyrazol-1-ylmethyl)-2,6-dimethylanilin und N-Isopropyl-N-chloracetyl-3,5,5(3)-trimethylcyclohex-1-enamin.

12. Verfahren zur Bekämpfung von unerwünschtem Pflanzenwuchs, dadurch gekennzeichnet, dass man ein Mittel gemäss einem der Ansprüche 1 bis 11 auf die zu bekämpfende Pflanze oder deren Lebensraum einwirken lässt.

13. Verfahren nach Anspruch 11 zur Bekämpfung von Unkräutern in Nutzpflanzenkulturen.

14. Verfahren nach Anspruch 13 zur Bekämpfung von Unkräutern in Mais-, Reis-, Sorghum-, Soja-, Zuckerrüben-, Baumwoll-, Sonnenblumen- und Erdnuss-Kulturen.

15. Saatgut welches mit einer herbizid wirksamen Menge eines Mittels gemäss einem der Ansprüche 1 bis 11 gebeizt wurde.